# EUROPEAN PATENT APPLICATION

(11) **EP 1 734 320 A2**
(43) Date of publication of application: **20.12.2006**
(21) Application number: 06011959.1
(22) Date of filing: 09.06.2006
(51) Int. Cl.: F25D 3/10

(54) **Process and apparatus for continuous cooling of pumpable material with a liquid cryogen**

(30) Priority: 16.06.2005 US 154757; 05.05.2006 US 418316
(71) Applicant: Air Products and Chemicals, Inc., Allentown, PA 18195-1501 (US)
(72) Inventor: Rosenbaum, Uwe, 44892 Bochum (DE); Aust, Harald, 45147 Essen (DE); Miller, Jeremy Paul, Mortimer Berkshire RG7 3NR (GB); Hannay, Neil, Hindhead Surrey GU26 6RX (GB)
(74) Representative: Marx, Lothar

(57) **Abstract**

System for cooling a pumpable material comprising an inline continuous mechanical mixer (1) having a feed inlet (11), a liquid cryogen inlet (13), and a cooled product outlet (15); a cryogenic liquid delivery and injection system adapted to introduce a liquid cryogen into the liquid cryogen inlet (13); and a feed system adapted to introduce the pumpable material into the feed inlet (11).

## Description

### BACKGROUND OF THE INVENTION

Processes for the cooling of pumpable materials are important in the manufacture of prepared foods, confections, pharmaceuticals, health care products, cosmetics, specialty chemicals, and other high-value products. Cooling may be effected by indirect heat exchange with cooling water, refrigerants, or cold process streams in various types of indirect heat exchangers including shell-and-tube, scraped surface, tube-in-tube, coil-in-kettle, and multi-plate. Alternatively, cooling may be effected by direct contact of the pumpable materials with coolants such as chilled water, cold gas, or vaporizing cryogenic liquids.

The cooling of pumpable materials may be carried out in batch or continuous processes. In certain applications, for example, the manufacture of prepared foods, rapid cooling is required to minimize the cooling time in a temperature range conducive to the growth of undesirable bacteria. The application of vaporizing cryogenic liquids in the prepared food industry is advantageous for the rapid cooling of warm intermediate materials and/or final prepared food products.

The cooling of pumpable materials with vaporizing cryogenic liquids may be carried out in mixed batch processes or in continuous processes using static inline mixers. There is a need in the art for improved cooling methods using vaporizing cryogenic liquids, and in particular for continuous processes that provide cooling by vaporizing cryogens. This need is addressed by embodiments of the present invention described below and defined by the claims that follow.

### BRIEF SUMMARY OF THE INVENTION

An embodiment of the invention relates to a system for cooling a pumpable material comprising (a) an inline continuous mechanical mixer having a feed inlet, a liquid cryogen inlet, and a cooled product outlet; (b) a cryogenic liquid delivery and injection system adapted to introduce a liquid cryogen into the liquid cryogen inlet; and (c) a feed system adapted to introduce the pumpable material into the feed inlet. The system may further comprise a product receiver connected to the cooled product outlet and adapted to disengage vaporized cryogen from cooled product to provide a final cooled product and vaporized cryogen. The inline continuous mechanical mixer may be selected from the group consisting of paddle, single rotor, multi-rotor, pin, medium shear, high shear, axial flow, cross flow, propeller, scraped surface, and turbine mixers.

The inline continuous mechanical mixer is driven by an electric motor; the power rating of the electric motor and the internal volume of the inline continuous mechanical mixer may be characterized by a power to volume ratio in the range of 0.3 to 2.0 kW per liter of internal volume of the inline continuous mechanical mixer.

The liquid cryogen inlet typically is located adjacent the feed inlet. The system may further include at least one additional liquid cryogen inlet disposed between the feed inlet and the intermediate cooled product outlet. The cryogenic liquid storage and injection system typically is adapted to store and inject a liquid cryogen selected from the group consisting of liquid nitrogen, liquid carbon dioxide, liquid argon, and liquid air.

The liquid cryogen inlet may include a nozzle and a heating system to heat the nozzle. The inline continuous mechanical mixer typically includes a vessel with walls having an inner surface and an outer surface and may include a mixer heating system adapted to heat the inner surface; in this case, the liquid cryogen inlet may comprise a nozzle and a nozzle heating system to heat the nozzle. The mixer heating system may be selected from the group consisting of a recirculating hot water jacket in contact with the outer surface of the vessel, steam tracing on the outer surface of the vessel, and electric resistance heaters on the outer surface of the vessel. The nozzle may comprise a heat conductive metal selected from copper, brass, bronze, aluminum, and combinations of these metals, wherein the heat conductive metal is in thermal contact with the mixer heating system, or the inner surface of the vessel, or the mixer heating system and the inner surface of the vessel.

This embodiment may further comprise an additional inline continuous mechanical mixer having a intermediate feed inlet and a secondary cooled product outlet, wherein intermediate cooled product outlet of the inline continuous mechanical mixer of (a) is connected to the intermediate feed inlet of the additional inline continuous mechanical mixer. The additional inline continuous mechanical mixer may have a liquid cryogen inlet adjacent the intermediate feed inlet and connected to the cryogenic liquid storage and injection system of (b).

Another embodiment of the invention relates to a method for cooling a pumpable material comprising
(a) providing a system for mixing and cooling the pumpable material including
   (1) an inline continuous mechanical mixer having a feed inlet, a liquid cryogen inlet, and a cooled product outlet;
   (2) a cryogenic liquid storage and injection system adapted to introduce a liquid cryogen into the liquid cryogen inlet; and
   (3) a feed system adapted to introduce the pumpable material into the feed inlet;
(b) introducing the pumpable material into the feed system and into the inline continuous mechanical mixer via the feed inlet;
(c) introducing the liquid cryogen into the inline continuous mechanical mixer via the liquid cryogen inlet;
(d) mixing the liquid cryogen and the pumpable material during passage through the inline continuous mechanical mixer, thereby vaporizing the liquid cryogen and cooling the pumpable material; and
(e) withdrawing a cooled product via the cooled product outlet.

This embodiment may further comprise providing a product receiver connected to the cooled product outlet, introducing the cooled product into the product receiver, disengaging vaporized cryogen from the intermediate cooled product, and withdrawing from the product receiver a final cooled product and vaporized cryogen. The liquid cryogen may be selected from the group consisting of liquid nitrogen, liquid carbon dioxide, liquid argon, and liquid air. The mass flow ratio of the liquid cryogen to the pumpable material may be in the range of 0.1 to 2.0.

The inline continuous mechanical mixer may be a paddle mixer, which may be operated at a rotational speed in the range of 400 to 2000 revolutions per minute. The residence time of the pumpable material in the inline continuous mechanical mixer may be between 1 and 60 seconds.

The pumpable material may be selected from the group consisting of an oil-in-water emulsion, a water-in-oil emulsion, a solid-liquid slurry, a paste, a liquid, and a pumpable flowable powder. The pumpable material may be selected from the group consisting of mayonnaise, toppings, sauces, soups, milk-containing mixtures, margarine, ice cream, puddings, mousse products, cheese and curd products, pestos, chutneys, and beverages.

In a variation of this embodiment, the inline continuous mechanical mixer may be a paddle mixer, the pumpable material may be mayonnaise, and the liquid cryogen may be liquid nitrogen. In this variation, the paddle mixer may be operated at a rotational speed in the range of 500 to 900 revolutions per minute.

The inline continuous mechanical mixer typically includes a vessel with walls having an inner surface and an outer surface and includes a mixer heating system adapted to heat the inner surface while mixing the liquid cryogen and the pumpable material during passage through the inline continuous mechanical mixer, thereby preventing freezing of the pumpable material on the inner surface of the inline continuous mechanical mixer. The liquid cryogen inlet may include a nozzle and a nozzle heating system to heat the nozzle while introducing the liquid cryogen into the inline continuous mechanical mixer via the liquid cryogen inlet, thereby preventing freezing of the pumpable material on the nozzle.

### BRIEF DESCRIPTION OF SEVERAL VIEWS OF THE DRAWINGS

Fig. 1 is a schematic flow diagram of an embodiment of the present invention.

Fig. 2 illustrates an exemplary relationship among liquid nitrogen flow, product flow, and cooling requirement for a given liquid nitrogen calorific value according to an embodiment of the invention.

### DETAILED DESCRIPTION OF THE INVENTION

The embodiments of the present invention relate to a continuous process for the rapid cooling of a pumpable material by mixing the material with a vaporizing cryogenic liquid or cryogen while the material and cryogen flow through an inline continuous mechanical mixer. As the cryogen vaporizes, the material is cooled and vapor is formed. The cooling is characterized by direct heat transfer from the pumpable material to the cryogen wherein heat is absorbed by the latent heat of vaporization of the cryogen and the sensible heat of the warming vapor. The discharge from the inline continuous mechanical mixer may flow into a product receiver to disengage and exhaust vaporized cryogen from the intermediate cooled product to provide a final cooled product and vaporized cryogen. Optionally, some residual gas may remain in the cooled material if desired to provide a light gas-filled, whipped, or moussed product.

The term "cooling" is defined as the removal of heat from the pumpable material wherein the heat removed may be sensible heat, latent heat, or both sensible heat and latent heat of components in the pumpable material. Components in the pumpable material may change from the liquid to the solid phase under appropriate cooling conditions.

A wide range of materials may be processed using the embodiments of the invention as long as the material can be pumped through the inline continuous mechanical mixer, i.e., as long as each material is a pumpable material. These pumpable materials may include, for example, prepared foods, confections, pharmaceuticals, health care products, cosmetics, specialty chemicals, and other high-value products which require rapid direct cooling in the manufacturing process. The pumpable material may be, for example, an oil-in-water emulsion, a water-in-oil emulsion, a solid-liquid slurry, a paste, a liquid, or a pumpable flowable powder.

The rapid cooling provided by embodiments of the invention has particular utility in the prepared food industry. Food products that can be cooled advantageously by the process may include, for example, mayonnaise, toppings, sauces, soups, milk-containing mixtures, margarine, ice cream, puddings, mousse products, cheese and curd products, pestos, chutneys, and beverages. Any pumpable food product or intermediate material may be cooled using the embodiments described herein. The cooling process may be used to freeze or partially freeze material to make pumpable products such as frozen confections, flavored ices, frozen toppings, and the like.

The term "pumpable material" is defined as any material that can be caused to flow through an inline continuous mechanical mixer. The pressure driving force required to force the material to flow through the mixer may be provided by any known pressurizing device. This device may be any type of positive displacement pump known in the art, for example, a progressive cavity, piston, gear, lobe, signe, diaphragm, peristaltic, or screw pump. Alternatively, the pressurizing device may provide the pressure driving force by gravity, pressurized gas, or pressurized liquid.

The term "feed system" is defined herein as apparatus adapted to introduce the pumpable material into the inline continuous mechanical mixer including, but not limited to, a pressurizing device to provide the pressure driving force described above and piping from the pressurizing device to the inline continuous mechanical mixer.

The term "inline continuous mechanical mixer" is defined as a vessel having an inlet and an outlet wherein one or more mechanical mixing devices are disposed within the mixing vessel between the inlet and outlet and are adapted to mix the pumpable material as it passes through the vessel. A mechanical mixing device is a rotating or moving element that promotes physical mechanical mixing of the pumpable material as it moves through the vessel. Rotating or moving elements may include, for example, paddles, pins, scrapers, propellers, turbines, or other devices that shear the pumpable material to cause mixing. Exemplary types of inline continuous mechanical mixers may include, for example, an axial-flow tubular vessel having a coaxial shaft that passes through the vessel and is fitted with shear-inducing elements such as radial paddles, pins, or scrapers. The shaft is rotated to induce mixing of the pumpable material as it flows through the tubular vessel.

A liquid cryogen is defined as any liquid that has a boiling point below ambient temperature and particularly below about -40°C. The terms "liquid cryogen", "cryogenic liquid", and "cryogen" are equivalent and have the same meaning.

In order to prevent freezing of the pumpable material on the walls of the inline continuous mechanical mixer, the walls may be heated by any appropriate means such as, for example, a recirculating hot water jacket in contact with the outer surface of the mixer vessel, steam tracing on the outer surface of the vessel, and/or electric resistance heaters on the outer surface of the vessel.

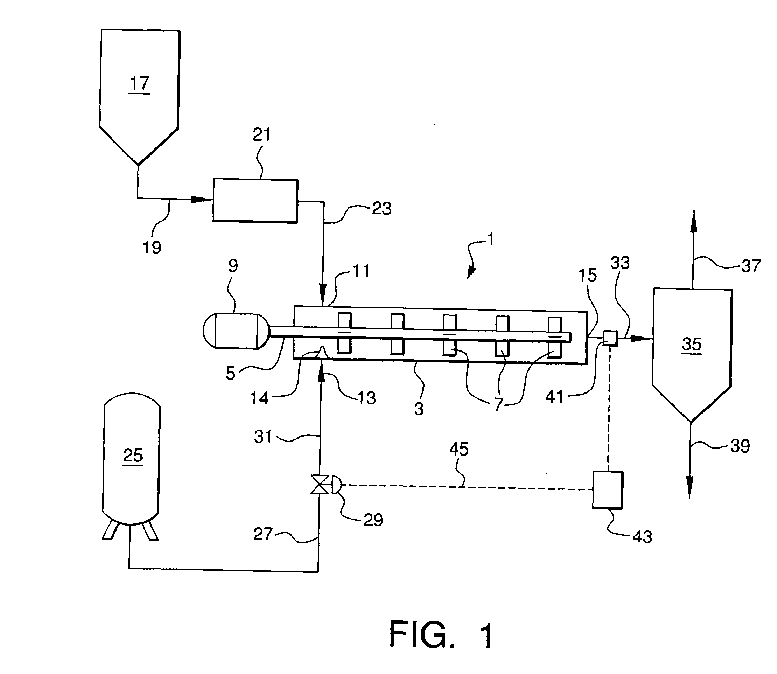

An example of a system having utility for embodiments of the invention is shown in the schematic process flow diagram of Fig. 1. Exemplary inline continuous mechanical mixer 1 comprises tubular vessel 3, coaxial mixer shaft 5, paddles or mixing elements 7, electric drive motor 9, pumpable material inlet 11, cryogen inlet 13, and cooled pumpable material outlet 15. The power rating of the electric motor and the internal volume of the inline continuous mechanical mixer may be characterized by a power to volume ratio in the range of 0.3 to 2.0 kW per liter of internal volume of the inline continuous mechanical mixer. The feed material to be cooled may be stored as needed in feed vessel 17, flows via line 19 to pump 21, and is pumped via line 23 to pumpable material inlet 11. Liquid cryogen is stored in insulated cryogen storage tank or dewar 25 and flows via line 27, flow control valve 29, and line 31 to cryogen inlet 13. Cryogen injector nozzle 14 may be used to inject cryogen into the feed material, and radially-oriented multiple nozzles may be used if desired. Any type of insulated liquid cryogen storage and piping system may be used as is known in the art.

Alternatively, instead of using pump 21, the feed material may flow by gravity through lines 19 and 23 when sufficient head is provided between feed vessel 17 and inline continuous mechanical mixer 1. Additionally or alternatively, the feed material may be pressurized by a gas or liquid in the head space of feed vessel 17 and the pressurized feed directed to flow through lines 19 and 23.

Cooled pumpable material exits the mixer via outlet 15 and line 33 and may flow to product receiver 35, where vaporized cryogen, water, and entrained product (if present) may be disengaged from the cooled material as required. Alternatively, the cooled material may flow directly from cooled pumpable material outlet 15 to a product packaging step (not shown). Cryogen vapor is discharged via line 37 and the final cooled product is withdrawn via line 39. The flow rate of the cryogen may be controlled manually via flow control valve 29. Alternatively, the cryogen flow may be controlled by measuring the temperature of the cooled material by temperature element 41 and using this measured temperature to control the cryogen flow rate by controller 43 via control signal line 45. Other cryogen flow control methods are possible. For example, the temperature of the feed material in line 23 can be measured and utilized for feedforward control of the cryogen flow by flow control valve 29.

Process variations of the system of Fig. 1 are possible to increase operating efficiency or throughput. For example, multiple cryogen injection points may be used along tubular vessel 3. In another alternative, two or more inline continuous mechanical mixers may be arranged in series and/or in parallel. The tubular mixer may be mounted horizontally, vertically, or at any angle as desired for optimum performance. If desired, additional ingredients may be introduced via another inlet (not shown) at or near the inlet of tubular vessel 3. These additional ingredients could include, for example, herbs, flavorings, diced onions, and the like.

The outer surface of tubular vessel 3 may be heated by any appropriate means (not shown) in order to heat to the inner surface of the vessel to prevent freezing and sticking of the pumpable material on this surface. Heating means may include, for example, a recirculating hot water jacket in contact with the outer surface of the vessel, steam tracing on the outer surface of the vessel, and/or electric resistance heaters on the outer surface of the vessel. Cryogen injector nozzle 14 also may be heated to prevent freezing and sticking of the pumpable material to the inner and/or outer surfaces of the nozzle. This may be accomplished, for example, by fabricating the nozzle at least in part from a heat-conductive metal such as copper, brass, bronze, aluminum, or combinations thereof, wherein the heat-conductive metal is in thermal contact with either of or both of the mixer vessel heating system and the inner surface of the vessel. The surface of the nozzle in contact with the pumpable product may be fabricated of stainless steel, for example, if the pumpable material is a food, pharmaceutical, or corrosive product.

Generic types of continuous mixers that may be used in embodiments of the invention may include, for example, paddle, single rotor, multi-rotor, pin, medium shear, high shear, axial flow, cross flow, propeller, scraped surface, and turbine mixers. Exemplary commercially-available inline continuous mechanical mixers that may be adapted for use in the system illustrated in Fig. 1 include various models of the axial paddle mixer sold by AEROMIX Gmbh in Germany. A scraped surface mixer may be a scraped surface heat exchanger selected from, for example, the Votator^{®} line of scraped-surface heat exchangers sold by Waukesha Cherry-Burrell of Delavan, WI, USA, Contherm^{®} and ViscoLine exchangers sold by Alfa Laval, the Thermorotor exchanger sold by GMF-Gouda in the Netherlands, the Schroeder Kombinator in Germany, and the scraped surface heat exchangers sold by APV/Invensys. If a scraped surface heat exchanger is used, the outer wall would be heated rather than cooled; the heating may be provided by any appropriate means such as, for example, a recirculating hot water jacket, steam tracing, and/or electric resistance heaters on the outer surface of the vessel.

The system of Fig. 1 may be operated at various process conditions depending on the degree of cooling required, the properties of the pumpable material being cooled, and the specifications of the final cooled product. Controllable process variables include, for example, the amount of liquid cryogen supplied per unit amount of pumpable material processed, the degree of mixing (for example, the rotational speed of a paddle mixer) and the amount of mixing energy provided per unit amount of pumpable material processed, the residence time of the pumpable material in the inline continuous mechanical mixer, the temperatures of the heated mixer walls and the cryogen inlet nozzle, and the properties of the cryogen. Typical operating parameter ranges may include, for example, a mass flow ratio of the liquid cryogen to the pumpable material in the range of 0.1 to 2.0; a paddle mixer rotational speed in the range of 400 to 2000 revolutions per minute; a residence time of the pumpable material in the inline continuous mechanical mixer between about 1 and about 60 seconds; and specific power consumption of the electric motor driving the inline mixer in the range of 0.3 to 2.0 kW per liter of continuous mechanical mixer internal volume.

The cryogenically-cooled inline continuous mechanical mixer may be used to introduce gas into the final product by whipping or moussing while cooling takes place. The whipped product may be cooled into the freezing range to provide frozen whipped products such as cream, ice cream, and margarine. The choice of cryogen may be determined by the required product specifications. For example, nitrogen may be required in certain cases because of its inert and neutral properties. In other applications, carbon dioxide may be used for cooling products wherein the acidic properties and bacterial growth inhibiting properties of carbon dioxide are desirable.

Liquid nitrogen (LIN) is an advantageous cryogen for use with the various embodiments of the invention. The amount of LIN injection required during system operation is a function of various parameters such as, for example, (1) the purity and latent heat of vaporization of the liquid nitrogen being supplied, (2) the thermal characteristics of the product to be chilled and/or frozen, (3) the final temperature of the chilled/frozen product, (4) the amount or flow rate of the product to be chilled/frozen, and (5) the thermal losses of the process and equipment.

The calorific value of chilling which can be obtained from LIN is dependent upon the properties of the LIN and the efficiency at which it is used, i.e., the temperature at which the gas is released and the operating characteristics of the equipment supplying and using the LIN. For example, a value of 340kJ/kg may be taken as a typical amount of cold provided by vaporizing LIN including the latent heat of vaporization, sensible heat of the warming vapor, and representative heat losses in the system. If the LIN supply is subcooled and the gas fraction reduced, this value may be increased, for example, to 360kJ/kg.

All chemical or food products have different rates of chilling and freezing due to the properties of their constituents. The amount of refrigeration to chill one liquid from 50°C to 5°C, for example, will usually require a different amount of chilling than another liquid through the same temperature range. The actual amount of chilling provided may be expressed in kJ/kg of the product. For chilling down to the freezing point of a food substance, a relatively linear cooling rate usually occurs due to the relatively constant specific heat of the substance. For example, water chills at a specific heat of -4.2kJ/kg per °C until it begins to form ice at 0°C. For a food liquid product in which water is a large constituent, this constant rate of chilling may pass below 0°C due to the freezing point depression of the non-aqueous constituents. For example, one type of mayonnaise was observed to have a freezing point of about -5°C with a specific heat of 3.0 kJ/kg above that point. To cool from 30°C to -5°C therefore would require 75kJ/kg of chilling.

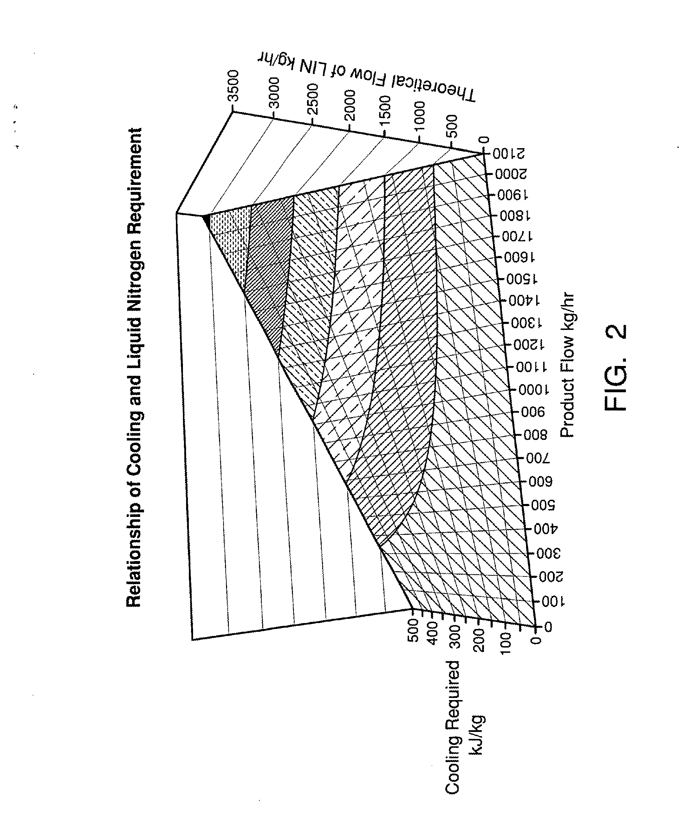

Once the product to be chilled is characterised for specific heat and the desired process requirements, the expected requirement for liquid nitrogen cooling can be determined. Fig. 2 illustrates one exemplary relationship among LIN flow, product flow, and cooling requirement for a given LIN calorific value. Other variables may change the LIN requirement relationships of Fig. 2. These variables may include, for example, thermal losses that change with ambient temperature, the heat of mixing of the specific product being cooled, individual process requirements, and the heat transfer and heat loss properties of specific equipment.

The following Examples illustrate embodiments of the present invention but do not limit the invention to any of the specific details described therein.

### EXAMPLE 1

A pumpable broccoli cream sauce was chilled from 8.2°C to temperatures below 0°C such that the product consistency became pasty and partially frozen, thereby making the chilled sauce suitable for forming sauce pellets. The chilling process utilized the system illustrated in Fig. 1. Feed vessel 17 was a 900 liter transitank for sauce storage. Pump 21 was a 12 stage progressive cavity Seepex pump having a 150 to 1500 m³/hr throughput and a 0.98kW drive motor.

Inline continuous mechanical mixer 1 was a dynamic paddle mixer with a continuously heated outer water jacket. The mixer had a ¼" connection for the inlet of LIN via line 31. The mixer barrel diameter was approximately 120 mm and the barrel length was approximately 500 mm. Drive motor 9 was rated at 1.1kW. The product inlet and outlet connections were DN 40. The paddle shaft had a diameter of approximately 15 mm and had five sections of three paddles each. RTD temperature probes were installed at the inlet and outlet of the mixer. A liquid flowmeter, temperature probe, and pressure transmitter were installed at the pump outlet (not shown in Fig. 1).

The mixer was fitted with a ¼" inlet for gaseous nitrogen (GAN) and 2-off Harsco 600 liter minitanks were provided for GAN and LIN supply at 4 bar supply pressure (GAN supply is not shown in Fig. 1). A 3-way ball valve with actuator (not shown) was provided to select between LIN supply and purging GAN supply. The LIN control valve was a Badger valve having a Cᵥ of 4.0 and was controlled either by product outlet temperature or set to a fixed opening. A Witt thermal relief valve was installed after the control valve.

A control panel was fitted with a Siemens OP17 HMI, C7634P PLC and inverters for pump and paddle mixer agitator speed control (not shown in Fig, 1).

The broccoli cream sauce was stored at approximately 8°C in a 900 liter transitank (feed vessel 17) at a depth of approximately 1.5 meters. The outlet of the tank was connected to the inlet of pump 21 by line 19, which was a flexible dairy hose, such that the sauce was gravity fed to pump 21. The sauce was delivered by the progressive cavity pump to continuous dynamic paddle mixer 1 via line 23, which was fitted with the flowmeter, pressure transmitter, and temperature probe.

The ¼" connection situated near the product inlet on the mixer was connected to the UN / GAN valve feed train. Delivery of either LIN (for cooling) or GAN (to purge) was effected by the position of the actuated three way ball valve.

The cooled product was directed to product receiver 35 by a 1½" diameter 90° bend connected to the paddle mixer outlet. This was fitted with a RTD temperature probe for outlet temperature measurement and automatic control (not shown). However, most final product temperature measurements were made with a handheld temperature probe inserted into the cooled product in product receiver 35.

Because the outlet of the mixer discharged both liquid and gaseous nitrogen, the trials were carried out in a well-ventilated area, and personal oxygen alarms were worn by all individuals involved in the trials.

The process parameters that can be set by the user in this Example include: (1) the flow rate of pumpable material through the equipment whereby the user sets pump speed on the HMI to control output from the controlling frequency inverter; (2) the LIN valve percentage opening setting; and (3) LIN consumption as estimated from the position of the valve and the delivery pressures of the liquid nitrogen supply.

Three chilling trials were carried out using the system described above and the results are summarized in Table 1 below.

**Table 1**

| Test Results for Example 1 | | | | | | | |
|---|---|---|---|---|---|---|---|
| Feed Flow | | Mixer Speed, RPM | LIN Flow, kg/hr | Temperatures, °C | | | LIN Consumed, kg/kg feed |
| I/hr | kg/hr | | | Inlet | Outlet | Decrease | |
| 1400 | 1400 | 600 | 1500 | 8.2 | -2.0 | 10.2 | 1.1 |
| 1120 | 1120 | 600 | 1980 | 8.2 | -2.4 | 10.6 | 1.8 |
| 840* | 840* | 600 | 1500 | 0 | -4.5 | 4.5 | 1.8 |

| | | | | | | | |
|---|---|---|---|---|---|---|---|
| * Sauce was recycled back through mixer in this trial run | | | | | | | |

As can be seen from the trial results, the sauce flow rate through the equipment and LIN flow rate were varied to change the time-temperature relationship of the cooling of the inline chiller equipment.

The first trial was carried out with a relatively high sauce flow rate and a medium LIN control valve setting. This trial indicated that the retention time in the paddle mixer achieved at 1,400 1/hr feed rate was too low to achieve sufficient cooling. The sauce was cooled from 8.2 °C to -2°C, thus failing to meet the desired final temperature of about -5°C. Further, the resultant product was not pasty (plastic) enough to form pellets.

Consequently, the feed flow rate was reduced in the second trial, thereby increasing the effective cooling time. The set point of the LIN control valve was set at 99%, increasing the cooling to the equipment. This setup did reduce the final temperature of the product slightly, but because the product was being partially frozen, the LIN cooling was mostly consumed by the latent heat of freezing of the product. The desired final temperature of -5°C was not achieved. However, no deterioration in the quality of the chilled sauce was observed at this lower feed rate, and the sauce was not grainy and showed no evidence of large ice crystals.

It was surmised that two inline chillers in series would be needed to achieve the desired final temperature of -5°C. To simulate two such inline chilling systems in series, another trial was run in which the sauce was passed through the mixer twice. This presented much more encouraging results, although it should be noted that the initial temperature of the product used in this trial was ~0 °C. This is because the transitank was no longer providing a steady flow of sauce because of insufficient liquid head. Hence it was necessary to use sauce that had been cooled in the earlier trials and which had warmed in the intervening period.

In this trial, the first pass through the unit reduced the sauce temperature to -2.6°C, still well within the latent freezing zone of the product. Having processed a portion of the sauce as above, the hopper on the pump was disconnected, drained and re-attached, thereby allowing the reprocessing of the batch of sauce which had just been cooled. This sauce at -2.6 °C was used to fill the feed hopper and further chilling proceeded using the same operating conditions as for the first chilling step.

The pre-cooled sauce that was processed on this second pass was of a plastic consistency and reached a temperature -4.5 °C. It was concluded that the use of two inline chiller units in series could yield a partially frozen product at a desired temperature of -5 °C. However, a system for full production would have to be carefully controlled to avoid complete freezing of the paste inside the mixer, and a higher power mixer likely would be necessary for this application.

### EXAMPLE 2

The equipment as described in Example 1 was operated with a more powerful mixer motor (1.5kW) to chill mayonnaise from 40°C to ~5°C. Six test trials were made for two different types of mayonnaise and the results are summarized in Table 2 below.

**Table 2**

| Test Results for Example 2 | | | | | | | | |
|---|---|---|---|---|---|---|---|---|
| Mayonnaise Feed Flow | | Mayo Type | Mixer Speed, RPM | LIN Flow, kg/hr | Temperatures, °C | | | LIN Consumed, kg/kg feed |
| I/hr | kg/hr | | | | Inlet | Outlet | Decrease | |
| 1000 | 920 | 1 | 600 | 250 | 36 | 3 | 33 | 0.3 |
| 1000 | 920 | 1 | 600 | 250 | 37 | 3 | 34 | 0.3 |
| 2750 | 2530 | 1 | 700 | 898 | 40.5 | 6 | 34.5 | 0.4 |
| 1500 | 1380 | 1 | 500* | 1540 | 49 | 10 | 39 | 1.1 |
| 1000 | 900 | 2 | 600 | 250 | 37.5 | 6 | 31.5 | 0.3 |
| 1000 | 900 | 2 | 600 | 200 | 37.5 | 4.5 | 33 | 0.2 |

| | | | | | | | | |
|---|---|---|---|---|---|---|---|---|
| *Gave insufficient mixing | | | | | | | | |

The results show the effectiveness of the equipment to cool the mayonnaise rapidly and efficiently. The degree of mixing is crucial for efficient system operation, especially for viscous products such as mayonnaise. This is illustrated by the test trial in which the mixer speed was reduced to 500 RPM. In this trial, adequate chilling was achieved, but the efficiency of LIN use dropped dramatically due to the inadequate mixing of the LIN and mayonnaise. Insufficient mixing caused slug flow through the mixer such that cold gas was discharged from the mixer, thereby wasting a portion of the refrigeration supplied by the LIN. Once the mixing is above a certain rate, the LIN/mayonnaise contact is sufficient for very efficient direct transfer of heat.

## Claims

1. A system for cooling a pumpable material comprising
(a) an inline continuous mechanical mixer having a feed inlet, a liquid cryogen inlet, and a cooled product outlet;
(b) a cryogenic liquid delivery and injection system adapted to introduce a liquid cryogen into the liquid cryogen inlet; and
(c) a feed system adapted to introduce the pumpable material into the feed inlet.

2. The system of Claim 1 further comprising a product receiver connected to the cooled product outlet and adapted to disengage vaporized cryogen from cooled product to provide a final cooled product and vaporized cryogen.

3. The system of Claim 1 wherein the inline continuous mechanical mixer is selected from the group consisting of paddle, single rotor, multi-rotor, pin, medium shear, high shear, axial flow, cross flow, propeller, scraped surface, and turbine mixers.

4. The system of Claim 1 wherein the inline continuous mechanical mixer is driven by an electric motor.

5. The system of Claim 4 wherein the power rating of the electric motor and the internal volume of the inline continuous mechanical mixer are **characterized by** a power to volume ratio in the range of 0.3 to 2.0 kW per liter of internal volume of the inline continuous mechanical mixer.

6. The system of Claim 1 wherein the liquid cryogen inlet is located adjacent the feed inlet.

7. The system of Claim 6 further comprising at least one additional liquid cryogen inlet disposed between the feed inlet and the intermediate cooled product outlet.

8. The system of Claim 1 wherein the cryogenic liquid storage and injection system is adapted to store and inject a liquid cryogen selected from the group consisting of liquid nitrogen, liquid carbon dioxide, liquid argon, and liquid air.

9. The system of Claim 1 wherein the liquid cryogen inlet comprises a nozzle and a heating system to heat the nozzle.

10. The system of Claim 1 wherein the inline continuous mechanical mixer includes a vessel with walls having an inner surface and an outer surface and includes a mixer heating system adapted to heat the inner surface.

11. The system of Claim 10 wherein the liquid cryogen inlet comprises a nozzle and a nozzle heating system to heat the nozzle.

12. The system of Claim 11 wherein the mixer heating system is selected from the group consisting of a recirculating hot water jacket in contact with the outer surface of the vessel, steam tracing on the outer surface of the vessel, and electric resistance heaters on the outer surface of the vessel.

13. The system of Claim 12 wherein the nozzle comprises a heat conductive metal selected from copper, brass, bronze, aluminum, and combinations of these metals, wherein the heat conductive metal is in thermal contact with the mixer heating system, or the inner surface of the vessel, or the mixer heating system and the inner surface of the vessel.

14. The system of Claim 1 further comprising an additional inline continuous mechanical mixer having a intermediate feed inlet and a secondary cooled product outlet, wherein intermediate cooled product outlet of the inline continuous mechanical mixer of (a) is connected to the intermediate feed inlet of the additional inline continuous mechanical mixer.

15. The system of Claim 15 wherein the additional inline continuous mechanical mixer has a liquid cryogen inlet adjacent the intermediate feed inlet and connected to the cryogenic liquid storage and injection system of (b).

16. A method for cooling a pumpable material comprising
(a) providing a system for mixing and cooling the pumpable material including
(1) an inline continuous mechanical mixer having a feed inlet, a liquid cryogen inlet, and a cooled product outlet;
(2) a cryogenic liquid storage and injection system adapted to introduce a liquid cryogen into the liquid cryogen inlet; and
(3) a feed system adapted to introduce the pumpable material into the feed inlet;
(b) introducing the pumpable material into the feed system and into the inline continuous mechanical mixer via the feed inlet;
(c) introducing the liquid cryogen into the inline continuous mechanical mixer via the liquid cryogen inlet;
(d) mixing the liquid cryogen and the pumpable material during passage through the inline continuous mechanical mixer, thereby vaporizing the liquid cryogen and cooling the pumpable material; and
(e) withdrawing a cooled product via the cooled product outlet.

17. The method of Claim 16 that further comprises providing a product receiver connected to the cooled product outlet, introducing the cooled product into the product receiver, disengaging vaporized cryogen from the intermediate cooled product, and withdrawing from the product receiver a final cooled product and vaporized cryogen.

18. The method of Claim 16 wherein the liquid cryogen is selected from the group consisting of liquid nitrogen, liquid carbon dioxide, liquid argon, and liquid air.

19. The method of Claim 16 wherein the mass flow ratio of the liquid cryogen to the pumpable material is in the range of 0.1 to 2.0.

20. The method of Claim 16 wherein the inline continuous mechanical mixer is a paddle mixer.

21. The method of Claim 20 wherein the paddle mixer is operated at a rotational speed in the range of 400 to 2000 revolutions per minute.

22. The method of Claim 16 wherein the residence time of the pumpable material in the inline continuous mechanical mixer is between 1 and 60 seconds.

23. The method of Claim 16 wherein the pumpable material is selected from the group consisting of an oil-in-water emulsion, a water-in-oil emulsion, a solid-liquid slurry, a paste, a liquid, and a pumpable flowable powder.

24. The method of Claim 16 wherein the pumpable material is selected from the group consisting of mayonnaise, toppings, sauces, soups, milk-containing mixtures, margarine, ice cream, puddings, mousse products, cheese and curd products, pestos, chutneys, and beverages.

25. The method of Claim 16 wherein the inline continuous mechanical mixer is a paddle mixer, the pumpable material is mayonnaise, and the liquid cryogen is liquid nitrogen.

26. The method of Claim 25 wherein the paddle mixer is operated at a rotational speed in the range of 500 to 900 revolutions per minute.

27. The method of Claim 16 wherein the inline continuous mechanical mixer includes a vessel with walls having an inner surface and an outer surface and includes a mixer heating system adapted to heat the inner surface while mixing the liquid cryogen and the pumpable material during passage through the inline continuous mechanical mixer, thereby preventing freezing of the pumpable material on the inner surface of the inline continuous mechanical mixer.

28. The method of Claim 27 wherein the liquid cryogen inlet comprises a nozzle and a nozzle heating system to heat the nozzle while introducing the liquid cryogen into the inline continuous mechanical mixer via the liquid cryogen inlet, thereby preventing freezing of the pumpable material on the nozzle.
